## Europäisches Patentamt

(19) **European Patent Office**

**Office européen des brevets**

(11) Publication number: **0 134 209**
**B1**

(12) **EUROPEAN PATENT SPECIFICATION**

(45) Date of publication of patent specification: **02.09.87**

(51) Int. Cl.⁴: **G 01 P 1/00, G 01 P 3/487**

(21) Application number: **83901166.5**

(22) Date of filing: **11.03.83**

(86) International application number:
**PCT/US83/00337**

(87) International publication number:
**WO 84/02984 02.08.84 Gazette 84/18**

(54) **GAP ADJUSTING SENSOR.**

(30) Priority: **28.01.83 US 461904**

(43) Date of publication of application:
**20.03.85 Bulletin 85/12**

(45) Publication of the grant of the patent:
**02.09.87 Bulletin 87/36**

(84) Designated Contracting States:
**BE DE FR GB SE**

(56) References cited:
**DE-A-2 548 773**
**FR-A-2 128 827**
**FR-A-2 287 700**
**US-A-3 772 548**

(73) Proprietor: **CATERPILLAR INC.**
**100 Northeast Adams Street**
**Peoria Illinois 61629-6490 (US)**

(72) Inventor: **FUZZELL, Joe, Edwin**
**2721 W. Gilbert Avenue**
**Peoria, IL 61604 (US)**

(74) Representative: **Jackson, Peter Arthur et al**
**GILL JENNINGS & EVERY 53-64 Chancery Lane**
**London WC2A 1HN (GB)**

Courier Press, Leamington Spa, England.

# Description

This invention relates generally to electronic sensors for determining the velocity, angular position, or direction of motion of a driven element and more particularly to an apparatus for adjusting the gap between the electronic sensor and the driven element.

Electronic sensors for determining the velocity, angular position, or direction of motion of a driven element, such as a gear, are well-known in the art, as evidenced by US—A—4045738, US—A—3262251 and US—A—4331917. Each of these patents employ a similar sensing device for producing a pulse train representative of the gear teeth moving past the sensor. Consequently, each of the three, and furthermore, all similar sensors, suffer from an inherent disadvantage. All of the sensors rely on a change in flux density induced by the gear teeth, and this change in flux density is influenced greatly by the air gap present between the gear tooth and the sensor. It is, therefore, necessary to minimize the air gap to obtain a pulse train of a sufficient magnitude. None of the above mentioned prior art documents addresses the problem of obtaining a minimum air gap in a variety of different applications without the use of either shims or customized sensor bodies and all require very exacting torques, making assembly a difficult and error prone procedure.

The present invention is directed to overcoming one or more of the problems as set forth above.

FR—A—2128827 discloses a sensing apparatus adapted for mounting adjacent a movable element having a plurality of radial protrusions, the apparatus comprising a first body and a flux sensitive electronic sensor, this first body having an opening and an opening inner surface, a second body or plunger element comprising a cylindrical hollow member associated with the sensor and adapted for positioning and moving within the opening of the first body, the plunger element having and end portion with on outwardly extending surface arranged to limit the downward movement of said plunger element within said opening, said plunger element being movable to a preselected location relative to the movable element in a response to contact with and movement of the movable element; and holding means for maintaining the plunger element at the preselected location. DE—A—2548773 and US—A—3772548 show similar devices having holding means acting as a frictional device to prevent undesirable movement of the plunger element and to maintain the position of the element until a force adequate to overcome the frictional coefficient of the holding means is applied to the plunger element.

According to the present invention there is provided apparatus for detecting a change in flux density of an air gap between itself and a movable element having a plurality of radial protrusions, the apparatus including a first body having an opening of a first diameter and defining an inner surface; a second body comprising a generally cylindrical hollow member having a magnetic flux sensitive electronic sensor disposed therewithin and being slidably movable within the opening in a direction radially outward in response to contact with said radial protrusions of the movable element; characterised in that the second body is a tubular member having a first end portion connected to the sensor and a plurality of slots extending longitudinally from a second end portion to form a unitary segmented annular cantilever spring, the second end portion having an outwardly extending surface arranged to contact the first body opening inner surface compressibly to provide a frictional force between the second body and the opening inner surface of the first body to maintain the second body at a preselected location relative to the first body in the absence of said contact with said radial protrusions causing said slidable movement.

The present invention directs itself to providing a single sensor functional in a wide variety of applications by adjusting the position of the electronic sensor in response to contacting the movable member. The mounting of the sensing apparatus is also greatly simplified, thereby reducing the probability of error during assembly.

In the drawings:

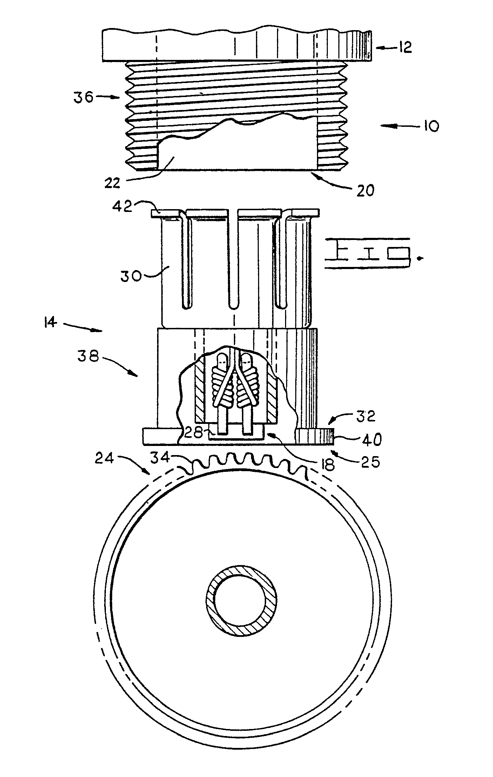

The Figure is a schematic drawing of an embodiment of the sensing apparatus.

Referring to the Figure, a sensing apparatus 10, adapted for mounting adjacent a movable element 24, has a first body 12 and an electronic sensor 18. The first body 12 additionally has an opening 20 and an opening inner surface 22. A second body or plunger element 14 associated with the electronic sensor 18 is adapted for positioning and moving within the opening 20 of the first body 12. The plunger element 14 is movable to a preselected location relative to the movable element 24 in response to contacting the movable element 24. Holding means 30 is provided for maintaining the plunger element 14 at this preselected location.

By compressing the holding means 30, the plunger element 14 can be inserted into the opening 20 of the body 12. The holding means 30 will expand, thus contacting the opening inner surface 22 and the plunger element 14, thereby acting as a frictional device to prevent undesirable movement of the plunger element 14. The holding means 30 maintains the position of the plunger element 14 until a force adequate to overcome the frictional coefficient of the holding means 30 is applied to the plunger element 14. The frictional coefficient should be sufficient to prevent undesirable movement of the plunger element 14 caused by vibrational forces experienced in the most severe applications. The Figure shows a hollow cylindrical body with a flanged portion 42 adjacent one end, slots extending the length of the cylinder so as to form a segmented annular sporting providing a frictional force by the flanged portion 42 contacting the opening inner surface 22 of the first body 12.

2

Means 36 for mounting the first body 12 and positioning the plunger element 14 with the pathway of the movable element 24 is shown to be a threaded portion of the body 12, but it is recognised by those skilled in the art that any means for mounting the apparatus 10 (i.e. press fit, weld, etc.) would be considered equivalent.

The second body or plunger element 14 consists of a hollow cylindrical body formed from any of a variety of materials, preferably organic plastic. The body is hollows to accept the electronic sensor 18 within the plunger element 14 adjacent a first end 25 nearest the movable element 24. In this embodiment of the invention, the electronic sensor 18 is a Hall effect device 28, but the invention is not directed toward the type of electronic sensor 18 and any type of sensor capable of detecting speed, direction, or angle of motion could be reaily substituted for the Hall effect device 28 shown here and not depart from the scope of the invention. The first end 25 includes a flanged portion 40 acting as a means 32 for returning the adjustable means 38 to a first original position by urging the flanged portion 40.

At the time the sensing apparatus 10 is to be used with a movable element 24 having the form of a gear 34, the plunger element 14 should extend at least a sufficient distance to contact the gear 34 when the apparatus 10 is fully installed. This is easily accomplished by applying a force on the flanged portion 40 of the plunger element 14. As the body 12 is threaded into its mounting, the plunger element 14 will contact the gear 34 and be forced further into the opening 20. Installation of the apparatus 10 is complete once the body 12 has been adequately tightened to prevent loosening during severe vibratory periods.

The mechanics of installing the sensing apparatus 10 are thus essentially complete and positioning of the electronic sensor 18 to obtain a minimum air gap is automatically accomplished during normal operation.

During the initial operating period, motion of the gear 34 causes contact between the plunger element 14 and the gear 34 resulting in the plunger element 14 being forced into the opening 20 of the sensor body 12 to a preselected position. In this way the air gap between the plunger element 14 and the gear 34 is equal to the run out of th gear 34 which is the minimum attainable air gap. The holding means 30 will continue to hold the plunger element 14 at this preselected or minimum air gap position under the most severe applications.

If at any time it becomes necessary to remove the sensing apparatus 10, reinstalling the device is easily accomplished even under adverse field conditions. The same minimum air gap can be obtained by prying on the flanged portion 40 of the plunger element 14 to restore the plunger element 14 to the extended position and then reinserting the apparatus 10 into its mounting. The minimum air gap is once again established during normal operation.

As evident from the preceding description, the sensing apparatus 10 provides a desirable function. The ability to obtain a minimum air gap from a single generic sensor body is economically advantageously as well as important in that it greatly simplifies installation of the apparatus 10 and reduces the waste of materials, labour and time.

## Claims

1. Apparatus (10) for detecting a change in flux density of an air gap between itself and a movable element (24) having a plurality of radial protrusions, the apparatus including a first body (12) having an opening (20) of a first diameter and defining an inner surface (22); a second body (14) comprising a generally cylindrical hollow-member having a magnetic flux sensitive electronic sensor (18) disposed therewithin and being slidably movable within the ōpening (20) in a direction radially outward in response to contact with said radial protrusions of the movable element (24); characterised in that the second body (14) is a tubular member (30) having a first end portion (25) connected to the sensor (18) and a plurality of slots extending longitudinally from a second end portion to form an unitary segmented annular cantilever spring, the second end portion having an outwardly extending surface (42) arranged to contact the first body (12) opening inner surface (22) compressibly to provide a frictional force between the second body (14) and the opening inner surface (22) of the first body (12) to maintain the second body (14) at a preselected location relative to the first body (12) in the absence of said contact with said radial protrusions causing said slidable movement.

2. Apparatus (10) according to claim 1, wherein the electronic sensor (18) includes a Hall effect device (28).

3. Apparatus (10) according to claim 1 or claim 2, wherein the second body (14) is movable between a first position at which the electronic sensor (18) is in the pathway of the movable element (24) and a second position at which the electronic sensor (18) is at a preselected location spaced frōm the movable element (24).

4. Apparatus (10) according to claim 3, including means (32) for returning the second body (14) to the first position.

5. Apparatus (10) according to any of claims 1 to 4, wherein the movable element (24) is a gear (34).

## Patentansprüche

1. Vorrichtung (10) zum Feststellen eine Änderung der Flußdichte eines Luftspaltes zwischen sich selbst und einem beweglichen Element (24) mit einer Vielzahl von Radialvorsprüngen, wobei die Vorrichtung folgendes aufweist: einen ersten Körper (12) mit einer Öffnung (20) mit einem ersten Durchmesser und einer Innenoberfläche (22) definierend, einen zweiten Körper (14), der ein im ganzen zylindrisches hohles Glied aufweist mit einem magnetflußempfindlichen elektronischen Sensor (18) darinnen angeordnet und gleitend innerhalb der Öffnung (20) in einer Richtung radial nach außen bewegbar, und zwar infolge Kontakts mit den Radialvorsprüngen des beweglichen Elements (24), dadurch gekennzeichnet, daß der zweite Körper (14) ein rohrförmiges Glied (30) ist mit einem ersten Endteil (25) verbunden mit dem Sensor (18) und mit einer Vielzahl von Schlitzen, die sich in Längsrichtung von einem zweiten Endteil aus erstrecken, um eine einstükkige segmentierte Ringhebelfeder zu bilden, wobei der zweite Endteil eine sich nach außen erstreckende Oberfläche (42) aufweist, und zwar angeordnet zur Kontaktierung der Innenoberfläche (22) des ersten Körpers (12) in zusammendrückbarer Weise, um eine Reibungskraft zwischen dem zweiten Körper (14) und der Innenoberfläche (22) der Öffnung des ersten Körpers (12) vorzusehen, um den zweiten Körper (14) an einer vorgewählten Stelle bezüglich des ersten Körpers (12) zu halten, und zwar bei Nichtvorhandensein des Kontaktes mit den Raidalvorsprüngen, die die Gleitbewegung bewirken.

2. Vorrichtung nach Anspruch 1, wobei der elektronische Sensor (18) eine Hall-Effektvorrichtung (28) aufweist.

3. Vorrichtung (10) nach Anspruch 1 oder 2, wobei der zweite Körper (14) zwischen einer ersten Position und einer zweiten Position beweglich ist, wobei in der ersten Position der elektronische Sensor (18) sich in der Bahn des beweglichen Elements (24) befindet, und während in der zweiten Position der elektronische Sensor (18) sich an einer vorgewählten Stelle mit Abstand gegenüber dem beweglichen Element (24) befindet.

4. Vorrichtung (10) nach Anspruch 3 mit Mitteln (32) zur Rückführung des zweiten Körpers (14) in die erste Position.

5. Vorrichtung (10) nach einem Ansprüche 1 bis 4, wobei das bewegliche Element (24) ein Zahnrad (34) ist.

**Revendications**

1. Dispositif (10) pour détecter une modification de la densité de flux d'un espace d'air entre lui et un élément mobile (24) comportant plusieurs saillies radiales, le dispositif comprenant un premier corps (12) ayant une ouverture (20) d'un premier diamètre et délimitant une surface intérieure (22); un second corps (14) comprenant un organe creux de forme générale cylindrique dans lequel est disposé un détecteur électronique (18) sensible au flux magnétique et qui est déplaçable à glissement à l'intérieur de l'ouverture (20) dans un sens radialement vers l'extérieur en réponse à une mise en contact avec lesdites saillie radiale de l'élément mobile (24), caractérisé en ce que le second corps (14) est un organe tubulaire (30) ayant une première portion d'extrémité (25) reliée au détecteur (18) et plusieurs fentes s'étendant longitudinalement à partir d'une second portion d'extrémité pour former un ressort unitaire annulaire en porte-à-faux formé de segments, la seconde portion d'extrémité ayant une surface s'étendant vers l'extérieur (42) agencée pour entrer en contact par compression avec la surface intérieure (22) de l'ouverture du premier corps (12) pour créer une force defriction entre le second corps (14) et la surface intérieure (22) de l'ouverture du premier corps (12) pour maintenir le second corps (14) dans une position présélectionée par rapport au premier corps (12) en l'absence dudit contact avec lesdites saillies radiales provoquant ledit déplacement glissant.

2. Dispositif (10) selon la revendication 1, dans lequel le détecteur électronique (18) comprend un dispositif à effet Hall (28).

3. Dispositif (10) selon la revendication 1 ou la revendication 2, dans lequel le second corps (14) est déplacable entre une première position pour laquelle le détecteur électronique (18) est sur la trajectoire de l'élément mobile (24) et une seconde position dans laquelle ale détecteur électronique (18) est dans une position présélectionnée espacée de l'élément mobile (24).

4. Dispositif (10) selon la revendication 3, comprenant un moyen (32) pour ramener le second corps (14) dans sa première position.

5. Dispositif (10) selon l'une quelconque des revendications 1 à 4, dans lequel l'élément mobile (24) est une roue dentée (34).